# EUROPÄISCHE PATENTSCHRIFT

(11) **EP 2 119 381 B1**
(45) Veröffentlichungstag und Bekanntmachung des Hinweises auf die Patenterteilung: **17.11.2010**
(21) Anmeldenummer: 08009022.8
(22) Anmeldetag: 15.05.2008
(51) Int. Cl.: A47G 19/24, A01K 61/02

(54) **Futterkorb für Fischfutter**
Food basket for fish food
Panier à aliments pour aliments pour poissons

(43) Veröffentlichungstag der Anmeldung: 18.11.2009
(73) Patentinhaber: Zebco Sports Europe GmbH, 21255 Tostedt (DE)
(72) Erfinder: Delwes, Peter, 27308 Kirchlinteln (DE)
(74) Vertreter: Bockhorni & Kollegen

(56) Entgegenhaltungen:
- DE-U1- 29 601 697
- DE-U1-202004 014 142
- DE-U1-202007 016 813
- GB-A- 1 503 515
- US-A- 4 832 235
- US-A- 5 845 816

## Beschreibung

Die Erfindung bezieht sich auf einen Futterkorb für Fischfutter zur Verfütterung von Lebendfutter und von Grundfutter an zu angelnde Fische. Um die Fische beim Angeln zum Beißen zu verleiten, ist es zunächst erforderlich, sie anzulocken und durch eine Vorfütterung in einen beißfreudigen Zustand zu versetzen, der dann schließlich dazu führt, dass sie auch einen an einem Angelhaken befestigten Köder schlucken und anschließend vom Angler herausgezogen werden können.

Futterkörbe sind aus dem Stand der Technik bekannt. Beispielsweise aus dem Händlerkatalog 2008 der Zebco Sports Europe GmbH, Elsterbogen 12-14, 21255 Tostedt. Auf Seite B61 des angeführten Kataloges sind beispielsweise im Wesentlichen zylindrische Futterkörbe gezeigt, die oben eine Öffnung haben und an ihren Außenseiten Löcher, wobei die Oberseite zum Beispiel mittels eines Deckelverschlusses verschließbar ist. Futterkörbe aus Metall und aus Kunststoff sind aus dem Stand der Technik bekannt.

Die Futterkörbe des Standes der Technik haben allgemein den Nachteil, dass die Beladungsöffnung für das Lebend- oder das Grundfutter relativ klein ist, so dass die Beladung im freien Feld relativ aufwendig ist und häufig Futter daneben fällt bzw. der Beladungsvorgang des Futterkorbes relativ zeitaufwendig ist. Offene Futterkörbe haben weiterhin den Nachteil, dass bei Beschickung mit Lebendfutter dieses durch die unverschlossene Öffnung entweichen kann. Weiterhin haben Futterkörbe des Standes der Technik den Nachteil, dass sie beim Fischen auf die Seite kippen und dabei einige der Öffnungen zur Abgabe des Futters am Boden zu liegen kommen und durch diesen verdeckt werden. Insbesondere beim Fischen ohne Pose ist es wichtig, dass ein lose an der Angelschnur geführter Futterkorb am Boden des Fischgewässers optimal zu liegen kommt, so dass all seine Öffnungen frei liegen und die Fische optimal angelockt werden können, bzw. gefüttert werden können. Ebenfalls besteht dann nicht die Gefahr, dass der Futterkorb auf dem Angelhaken zu liegen kommt.

Der vorliegenden Erfindung liegt das Problem zugrunde, einen verbesserten Futterkorb für Fischfutter anzugeben, der leicht beschickbar ist, der sowohl für Lebendfutter als auch für Grundfutter geeignet ist und der am Boden eines Fischgewässers nicht auf den Öffnungen zur Abgabe des Futters zu liegen kommt.

Diese Aufgabe wird für einen Futterkorb für Fischfutter gemäß den Merkmalen des Patentanspruches 1 gelöst.
Vorteilhafte Weiterbildungen des erfindungsgemäßen Futterkorbes sind in den Patentansprüchen 2 bis 11 angegeben.

Besonders vorteilhaft weist ein erfindungsgemäßer Futterkorb eine durch einen Deckel verschließbare Beladungsöffnung auf, wobei der Verschluss der Beladungsöffnung durch eine Relativbewegung des Deckels bewirkt wird. Aufgrund dieser Bauweise weist der erfindungsgemäße Futterkorb keine losen Teile auf, so dass bei häufiger Benutzung in der freien Natur keine Teile, wie zum Beispiel ein loser Deckel, verloren gehen können.

Besonders vorteilhaft weist eine Weiterbildung des erfindungsgemäßen Futterkorbes einen zylindrischen Grundkörper auf und einen Deckel mit einem zylindrischen Grundkörper, die beide ineinander einsetzbar sind, wobei in einem Montagezustand sowohl eine Deckelbeladungsöffnung als auch die Beladungsöffnung des Grundkörpers durch die Relativbewegung zur Deckung gebracht werden können. Hierbei ist es unerheblich für die Wirkungsweise der Erfindung, ob die Deckelbeladungsöffnung an der Außenseite oder an der Innenseite des Zylinders und entsprechend umgekehrt die Beladungsöffnung an der Innenseite oder an der Außenseite angeordnet sind. Wichtig ist, dass durch eine Relativbewegung, beispielsweise eine Dreh- oder Schiebebewegung die beiden Öffnungen zur Deckung gebracht werden können, so dass eine leichte Beschickung mit Lebend- oder auch Grundfutter möglich ist.

Besonders vorteilhaft sind die Beladungsöffnungen an der Außenwand des Zylinders angeordnet. Es ist auch denkbar, dass die Beladungsöffnung an einer Stirnseite angeordnet ist, wobei allerdings naturgemäß bei einem langgestreckten Futterkorb nur relativ zur Außenwand kleine Öffnungen erzielbar sind.

Vorteilhaft ist bei einer Weiterbildung des erfindungsgemäßen Futterkorbes die Relativbewegung eine Drehbewegung, da so beispielsweise zwei ineinander gesetzte Zylinder leicht gegeneinander bewegt werden können und eine große Öffnung an der Außenwand des Zylinders durch die Relativbewegung freigegeben werden kann.

Vorteilhaft ist ebenso eine Schiebebewegung bei einer Weiterbildung des erfindungsgemäßen Futterkorbes denkbar, wobei beispielsweise zwei ineinander gesetzte Zylinder entlang ihrer Längsachse bewegt werden können, um eine Beladungsöffnung freizugeben.

Vorteilhaft weist eine Weiterbildung des erfindungsgemäßen Futterkorbes für Fischfutter mindestens eine Nebenöffnung auf, die bei geöffneter Beladungsöffnung geöffnet ist und bei verschlossener Beladungsöffnung verschlossen ist. Auf diese Weise wird eine optimale Anpassung der Freigabe des Futters an die Art des Futters sowie an das Fischgewässer ermöglicht.

Vorteilhaft weist eine Weiterbildung des erfindungsgemäßen Futterkorbes für Fischfutter eine Öse zur Durchleitung einer Angelschnur auf, da er auf diese Weise einfach an der Angelschnur ohne einen Knoten befestigt werden kann und den Angelhaken mit einem weiteren Köder im Gewässer nicht behindert.

Vorteilhaft weist eine Weiterbildung des erfindungsgemäßen Futterkorbes für Fischfutter an seiner Unterseite ein Gewicht auf, bevorzugt aus Metall mit einem hohen spezifischen Gewicht, da so beim Einwerfen des Futterkorbes in das Fischgewässer sichergestellt werden kann, dass die Unterseite in Wurfrichtung fliegt und die Unterseite ebenso zuerst in das Gewässer abtaucht.

Vorteilhaft weist eine Weiterbildung des erfindungsgemäßen Futterkorbes ein halbkugelförmiges Gewicht an ihrer Unterseite auf, weil insbesondere in Verbindung mit einem zylindrischen Futterkorb ein Effekt nach Art eines Stehaufmännchens erreicht wird, wobei, sofern die Gewichtsdifferenz zwischen dem Futterkorb und dem Gewicht entsprechend groß ist, der Futterkorb sich am Boden des Fischgewässers aufrichtet und somit alle Löcher zur Abgabe von Futter an die Fische von Wasser umgeben sind.

Vorteilhaft ist bei einer Weiterbildung des erfindungsgemäßen Futterkorbes für Fischfutter das Gewicht mit der Öse verbunden, weil auf diese Weise eine beispielsweise metallische Verbindung zwischen dem Gewicht an der Unterseite und der Öse an der Oberseite hergestellt wird und gleichzeitig die zwei Teile, das heißt der Deckel und der Grundkörper des Futterkorbes aneinander befestigt werden können.

Im Folgenden werden Ausführungsbeispiele der Erfindung anhand von Figuren weiter erläutert. Hierbei zeigen:
Fig. 1 ein Ausführungsbeispiel eines Futterkorbes für Fischfutter
Fig. 2 ein Ausführungsbeispiel eines Deckels für einen Futterkorb für Fischfutter
Fig. 3 einen im Vergleich zu Fig. 1 um 90° um seine Längsachse gedrehten Futterkorb für Fischfutter
Fig. 4 einen im Vergleich zu Fig. 2 um 90° um seine Längsachse gedrehten Deckel eines Futterkorbes für Fischfutter
Fig. 5 eine Draufsicht auf einen Deckel eines Futterkorbes für Fischfutter
Fig. 6 eine Draufsicht auf einen Grundkörper eines Futterkorbes für Fischfutter ohne den Deckel.

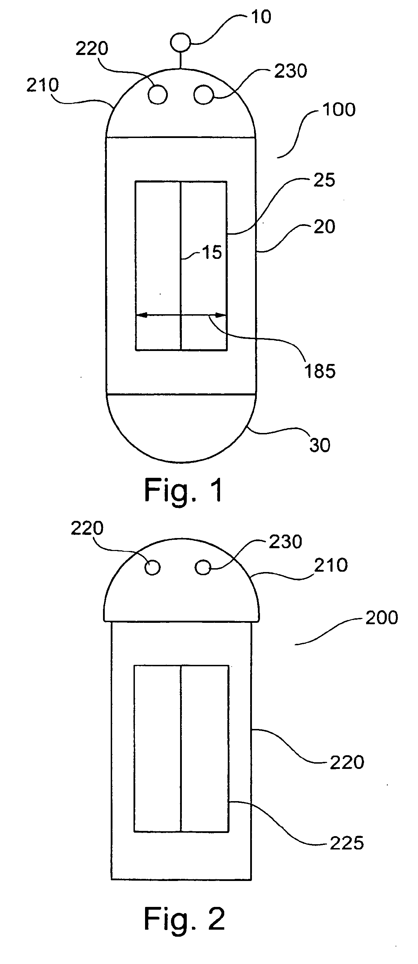

Fig. 1 zeigt ein Ausführungsbeispiel eines Futterkorbes für Fischfutter 100 gemäß der vorliegenden Erfindung. Insbesondere sind hier der Grundkörper 20, die Beladungsöffnung 25, sowie ein Gewicht an der Unterseite 30 dargestellt. Weiter ist eine Breite einer Öffnung der Beladungsöffnung 185 dargestellt sowie eine Öse an der Oberseite 10 und zwei Zusatzöffnungen 220 sowie 230.

Wie in Fig. 1 deutlich zu erkennen ist, weist der Futterkorb eine langgestreckte zylindrische Form auf und die Beladungsöffnung an der Außenseite des zylindrischen Futterkorbes nimmt einen großen Teil seiner Außenfläche, mehr als 50 %, insbesondere mehr als 45 % und speziell 40 % ein.

Wie aus Fig. 2 zu erkennen ist, besteht ein Ausführungsbeispiel eines Deckels für einen Futterkorb für Fischfutter gemäß einer Weiterbildung der vorliegenden Erfindung aus einem im Wesentlichen zylindrischen Grundkörper 220 und einer Deckelbeladungsöffnung 225. An einer halbkugelförmigen Oberseite 210 des Deckels 200 befinden sich Zusatzöffnungen 220, 230. Speziell können diese Zusatzöffnungen gemäß der vorliegenden Erfindung immer geöffnet bleiben.

Der Grundkörper des Deckels 220 weist einen im Vergleich zum Grundkörper des Futterkorbes 20 verringerten Durchmesser auf. Dadurch kann der Deckel, wenn er in den Grundkörper des Futterkorbes 220 eingesteckt ist, gegenüber diesem durch eine Drehbewegung um die Zylinderachse herum verdreht werden. Deutlich ist bei einem Vergleich von Fig. 1 und Fig. 2 zu erkennen, dass die Deckelbeladungsöffnung 225 und die Beladungsöffnung 25 des Futterkorbes für Fischfutter im Wesentlichen gleich groß sind, so dass durch ein Verdrehen des Deckels gegenüber dem Grundkörper 20 des Futterkorbes für Fischfutter um die Zylinderachse die beiden Beladungsöffnungen 225 und 25 zur Deckung gebracht werden können, wodurch eine große Öffnung im Futterkorb für Fischfutter freigegeben wird, über die einfach das Futter in den Futterkorb für Fischfutter hineingegeben werden kann.
Falls es sich bei dem zu verfütternden Futter um Lebendfutter handelt, so kann mittels einer Relativbewegung der Deckel 200 gegenüber dem Grundkörper 20 des Futterkorbes für Fischfutter verdreht werden, so dass die Beladungsöffnung 25 vollständig verschlossen ist. Falls jedoch nur Grundfutter verwendet wird, kann die Öffnung während des Futtervorgangs geöffnet verbleiben, so dass die Fische einen optimalen Zugang zum Futter haben.
Aus Fig. 1 ist ferner ein Verbindungsdraht 15 zu erkennen, der die Öse 10 mit dem Gewicht 30 verbindet. Obwohl hier der Futterkorb für Fischfutter als langgestreckter Zylinder dargestellt ist, kann der Futterkorb für Fischfutter ebenso als flacher Zylinder ausgeführt werden, ohne dass seine Funktionsweise beeinträchtigt wird. In diesem Ausführungsbeispiel kann beispielsweise Futterkorb für Fischfutter wie folgt zusammengebaut werden. Am Gewicht 30 wird bereits ein Metalldraht befestigt. Der Metalldraht wird durch den Grundkörper des Futterkorbes für Fischfutter 20 an dessen Bodenseite durchgeführt und wird nach Einsetzen des Deckels an der Oberseite durch eine Öffnung in der Oberseite des Deckels 210 herausgeführt. Im Anschluss wird eine Öse erzeugt, indem der Draht entsprechend verbogen wird. Dadurch werden der Grundkörper 20 und der in den Grundkörper eingesetzte Grundkörper 220 des Deckels mittels eines Drahtes zuverlässig verbunden.

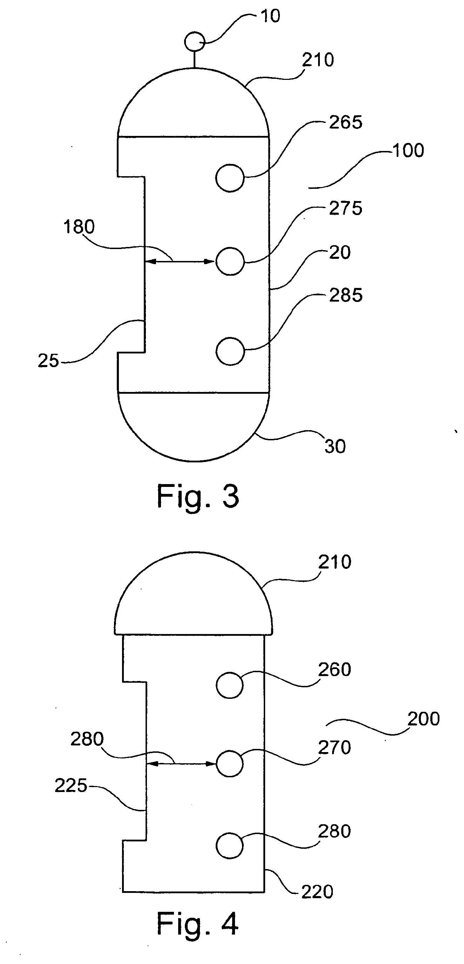

Fig. 3 zeigt eine Seitenansicht der Ausführungsform von Fig. 1, die gegenüber Fig. 1 um 90° um ihre Längsachse gedreht ist. Insbesondere sind in dieser Seitenansicht am Grundkörper des Futterkorbes für Fischfutter Nebenöffnungen 265, 275 und 285 zu erkennen. Die Größe dieser Nebenöffnung ist beispielsweise für den Durchlass von Maden optimiert.

Fig. 4 zeigt eine Seitenansicht einer Ausführungsform eines Deckels eines Futterkorbes für Fischfutter in Entsprechung zu Fig. 2 um 90° gedreht. Hier ist die Deckelbeladungsöffnung 225 zu erkennen, welche in ihrer Art der Beladungsöffnung 25 des Futterkorbes für Fischfutter entspricht.
Obwohl in den Fign. 1 bis 4 der Futterkorb für Fischfutter so dargestellt ist, dass der Deckel einen geringeren Durchmesser aufweist als der Grundkörper 20 des Futterkorbes für Fischfutter, kann diese Anordnung auch umgekehrt ausgeführt sein, ohne die Funktion der Erfindung zu beeinträchtigen. Es ist lediglich wichtig, dass in einem bestimmten Zustand der Deckel 200 und der Grundkörper 20 so angeordnet sind, dass die Beladungsöffnung 25 und die Deckelbeladungsöffnung 225 übereinander liegen. In Fig. 4 sind weiterhin Nebenöffnungen 260, 270 und 280 zu erkennen, wobei diese Nebenöffnungen bevorzugt so angeordnet sind, dass sie, wenn die Beladungsöffnung 25 freigegeben ist, über den Öffnungen 265, 275 und 285 des Grundkörpers des Futterkorbes für Fischfutter zu liegen kommen, da so bei geöffneter Beladungsöffnung auch die Nebenöffnungen freigegeben werden.

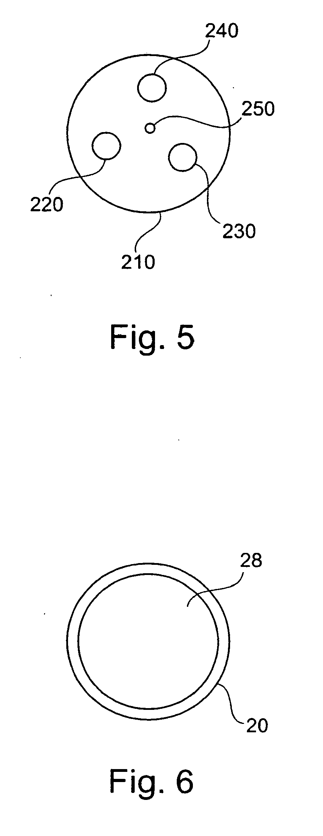

Fig. 5 zeigt eine Draufsicht auf ein Ausführungsbeispiel eines erfindungsgemäßen Futterkorbes für Fischfutter. Hier sind Zusatzöffnungen 220, 230 und 240 zu erkennen, die an der Oberseite des Deckels 210 angebracht sind. In der Mitte befindet sich eine kleine Öffnung 250, durch die beispielsweise der Draht 15 der Öse 10 hindurchgesteckt werden kann und beispielsweise an der Innenseite gekontert werden kann.

Fig. 6 zeigt ein Ausführungsbeispiel eines Grundkörpers eines Futterkorbes für Fischfutter 20 in der Draufsicht. Deutlich ist die Deckelöffnung 28 zu erkennen.

In Fig. 4 ist weiter ein Abstand zwischen einer Nebenöffnung 270 und einer Seitenkante der Deckelbeladungsöffnung 225 dargestellt, welcher mit 280 bezeichnet ist. Besonders vorteilhaft sind der Grundkörper 20 der Ausführungsform des erfindungsgemäßen Futterkorbes für Fischfutter und der Ausführungsform des Deckels 220 des Futterkorbes für Fischfutter so dimensioniert, dass die Breite der Beladungsöffnung 25, welche mit 185 in Fig. 1 bezeichnet ist, und der Abstand zwischen der Seitenkante 225 und einer Nebenöffnung 270, der mit 280 bezeichnet ist, im Wesentlichen gleichdimensioniert sind. So wird sichergestellt, dass beim Verdrehen keine der Nebenöffnungen 260 bis 280 in den Bereich der Beladungsöffnung 25 gelangt, und somit diese sicher verschlossen werden kann.

## Patentansprüche

1. Futterkorb für Fischfutter (100) aufweisend:
einen im Wesentlichen hohlen Grundkörper (20), welcher zumindest zwei Öffnungen, eine große Beladungsöffnung (25) und eine Deckelöffnung (28) umfasst,
einen zylindrisch geformten Deckel (200) zum Verschließen der Deckelöffnung (28) und der Beladungsöffnung (25), wobei der Deckel (200) mit dem Grundkörper (20) beweglich verbunden ist, so dass eine Relativbewegung des Deckels (200) in Bezug auf den Grundkörper (20) oder eine Relativbewegung des Grundkörpers (20) in Bezug auf den Deckel (200) die Beladungsöffnung (25) verschließt oder freigibt.

2. Futterkorb für Fischfutter (100) nach Anspruch 1, bei dem der Grundkörper (20) im Wesentlichen zylindrisch geformt ist,
, wobei der Grundkörper (20) und der Deckel (200) so bemessen sind, dass sie zu einem Montagezustand ineinander gesteckt werden können, wobei der Deckel (200) eine Deckelbeladungsöffnung (225) aufweist, die im Montagezustand und im eingesetzten Zustand mit der Beladungsöffnung (25) mittels der Relativbewegung zur Deckung gebracht werden kann.

3. Futterkorb für Fischfutter (100) nach einem der Ansprüche 1 bis 2, bei dem die Beladungsöffnung (25, 225) an der Zylinderaußenwand angeordnet ist.

4. Futterkorb für Fischfutter (100) nach einem der Ansprüche 1 bis 3, bei dem die Relativbewegung eine Drehbewegung ist.

5. Futterkorb für Fischfutter (100) nach einem der Ansprüche 1 bis 3, bei dem die Relativbewegung eine Verschiebebewegung ist.

6. Futterkorb für Fischfutter nach einem der vorhergehenden Ansprüche, bei dem sowohl der Deckel (200), als auch der Grundkörper (20) wenigstens eine Nebenöffnung (260, 270, 280) aufweisen, wobei bei geöffneter Beladungsöffnung (25) die Nebenöffnung (260, 270, 280) des Grundkörpers (20) und die Nebenöffnung des Deckels (200) übereinander liegen.

7. Futterkorb für Fischfutter (100) nach einem der vorhergehenden Ansprüche, bei dem bei verschlossener Beladungsöffnung (25) die wenigstens eine Nebenöffnung (260, 270, 280) verschlossen ist.

8. Futterkorb für Fischfutter (100) nach einem der vorhergehenden Ansprüche, bei dem an der Oberseite eine Öse (10) zur Durchleitung einer Angelschnur angeordnet ist.

9. Futterkorb für Fischfutter (100) nach einem der vorhergehenden Ansprüche, bei dem an der Unterseite ein Gewicht (30) angeordnet ist.

10. Futterkorb für Fischfutter (100) nach Anspruch 9, bei dem das Gewicht (30) halbkugelförmig ist.

11. Futterkorb für Fischfutter (100) nach einem der Ansprüche 8 bis 10, bei dem die Öse (10) und das Gewicht (30) miteinander (15) verbunden sind.

## Claims

1. Basket feeder for fish bait (100) comprising:
a substantially hollow base body (20) which has at least two openings, a large filling opening (25) and a top opening (28), [and]
a cylindrically shaped lid (200) to close the top opening (28) and the filling opening (25), the lid (200) being movably attached to the base body (20) so that the filling opening (25) is closed or uncovered by a movement of the lid (200) relative to the base body (20) or by a movement of the base body (20) relative to the lid (200).

2. Basket feeder for fish bait (100) according to Claim 1 wherein the base body (20) is substantially cylindrically shaped,
the dimensions of the base body (20) and lid (200) being such that they can be inserted one into the other upon assembly, the lid (200) itself having a filling opening (225) which in the assembled condition and in the inserted condition can be brought into register with the filling opening (25) by the relative movement.

3. Basket feeder for fish bait (100) according to either of Claims 1 and 2, wherein the filling opening (25, 225) is located on the outer wall of the cylinder.

4. Basket feeder for fish bait (100) according to any one of Claims 1 to 3 wherein the relative movement is a rotational movement.

5. Basket feeder for fish bait (100) according to any one of Claims 1 to 3 wherein the relative movement is a traversing movement.

6. Basket feeder for fish bait according to any one of the preceding claims, wherein both the lid (200) and the base body (20) have at least one secondary opening (260, 270, 280), the secondary opening (260, 270, 280) in the base body (20) and the secondary opening in the lid (200) being in register when the filling opening (25) is open.

7. Basket feeder for fish bait (100) according to any one of the preceding claims, wherein the at least one secondary opening (260, 270, 280) is closed when the filling opening (25) is closed.

8. Basket feeder for fish bait (100) according to any one of the preceding claims, wherein an eye (10) is arranged at the top as a leadthrough for a fishing line.

9. Basket feeder for fish bait (100) according to any one of the preceding claims, wherein a weight (30) is arranged on the underside.

10. Basket feeder for fish bait (100) according to Claim 9 wherein the weight (30) is hemispherical.

11. Basket feeder for fish bait (100) according to any one of Claims 8 to 10, wherein the eye (10) and the weight (30) are connected to each other (15).

## Revendications

1. Panier à aliments pour aliments pour poissons (100) comportant :
un corps de base (20), essentiellement creux, qui comprend au moins deux ouvertures, une grande ouverture de chargement (25) et une ouverture de couvercle (28),
- un couvercle (200), de forme cylindrique, servant à fermer l'ouverture de couvercle (28) et l'ouverture de chargement (25), le couvercle (200) étant assemblé de façon mobile avec le corps de base (20), de sorte qu'un mouvement relatif du couvercle (200), par rapport au corps de base (20), ou bien un mouvement relatif du corps de base (20), par rapport au couvercle (200), ferme ou libère l'ouverture de chargement (25).

2. Panier à aliments pour aliments pour poissons (100) selon la revendication 1, dans lequel le corps de base (20) est essentiellement de forme cylindrique, le corps de base (20) et le couvercle (200) étant dimensionnés de manière telle, qu'ils peuvent être emboîtés l'un dans l'autre pour un état de montage, le couvercle (200) comportant une ouverture de chargement de couvercle (225), qui dans l'état de montage et dans la situation installée, peut être placée en recouvrement de l'ouverture de chargement (25) au moyen du mouvement relatif.

3. Panier à aliments pour aliments pour poissons (100) selon l'une des revendications 1 à 2, dans lequel l'ouverture de chargement (25, 225) est disposée sur la paroi extérieure du cylindre.

4. Panier à aliments pour aliments pour poissons (100) selon l'une des revendications 1 à 3, dans lequel le mouvement relatif est un mouvement rotatif.

5. Panier à aliments pour aliments pour poissons (100) selon l'une des revendications 1 à 3, dans lequel le mouvement relatif est un mouvement de coulissement.

6. Panier à aliments pour aliments pour poissons (100) selon l'une des revendications précédentes, dans lequel aussi bien le couvercle (200) que le corps de base (20) comportent au moins une ouverture secondaire (260, 270, 280) par quoi, lorsque l'ouverture de chargement (25) est ouverte, l'ouverture secondaire (260, 270, 280) du corps de base (20) et l'ouverture secondaire du couvercle (200) se superposent.

7. Panier à aliments pour aliments pour poissons (100) selon l'une des revendications précédentes, dans lequel, lorsque l'ouverture de chargement (25) est fermée, l'au moins une ouverture secondaire (260, 270, 280) est fermée.

8. Panier à aliments pour aliments pour poissons (100) selon l'une des revendications précédentes, dans lequel un oeillet (10) servant à faire passer un fil de ligne est disposé sur le dessus.

9. Panier à aliments pour aliments pour poissons (100) selon l'une des revendications précédentes, dans lequel un poids (30) est disposé au dessous.

10. Panier à aliments pour aliments pour poissons (100) selon la revendication 9, dans lequel le poids (30) est de forme hémisphérique.

11. Panier à aliments pour aliments pour poissons (100) selon l'une des revendications 8 à 10, dans lequel l'oeillet (10) et le poids (30) sont reliés l'un à l'autre (15).
